# EUROPEAN PATENT SPECIFICATION

(11) **EP 4 361 803 B1**
(45) Date of publication and mention of the grant of the patent: **07.10.2026**
(21) Application number: 22857645.0
(22) Date of filing: 09.08.2022
(51) Int. Cl.: G06F 9/445, G06F 8/65, G06F 8/71, G06F 8/61

(54) **APPLICATION CONTROL METHOD AND SYSTEM, AND ELECTRONIC DEVICE**
ANWENDUNGSSTEUERUNGSVERFAHREN UND -SYSTEM SOWIE ELEKTRONISCHE VORRICHTUNG
PROCÉDÉ ET SYSTÈME DE COMMANDE D'APPLICATION ET DISPOSITIF ÉLECTRONIQUE

(30) Priority: 20.08.2021 CN 202110965582
(43) Date of publication of application: 01.05.2024
(73) Proprietor: Petal Cloud Technology Co., Ltd., Dongguan, Guangdong 523799 (CN)
(72) Inventor: LIANG, Yongfeng, Dongguan, Guangdong 523799 (CN); LI, Linfeng, Dongguan, Guangdong 523799 (CN); ZENG, Ronghua, Dongguan, Guangdong 523799 (CN)
(74) Representative: Isarpatent
(86) International application number: PCT/CN2022/111124
(87) International publication number: WO 2023/020333

(56) References cited:
- CN-A- 1 881 903
- CN-A- 107 784 086
- CN-A- 110 990 038
- CN-A- 110 990 038
- CN-A- 111 246 528
- JP-A- H1 139 153
- US-A1- 2011 321 028

## Description

### TECHNICAL FIELD

This disclosure relates to the field of computer technologies, and in particular, the invention relates to an application control method, a system, an electronic device and a computer-readable storage medium.

### BACKGROUND

With development of Internet technologies, different types of applications (applications, APPs) may be installed on an electronic device (for example, a mobile phone or a tablet computer), to meet a usage requirement of a user.

Currently, due to regional service differences or regional requirement differences, a developer develops different application versions based on different APP distribution regions. Different application versions have differences in functions. Because application versions of APPs that can be used in different regions are different, the user cannot enjoy a function of an APP in a new region in time when crossing regions, causing poor user experience.
CN 110990038 A relates to a method and apparatus for performing partial updates to applications on electronic devices.
US 2011/321028 A1 relates to a system and method for managing applications composed of multiple experience modules, tailored to run efficiently across different device types.

### SUMMARY

The object of the present inventio is to provide an application control method, a system, an electronic device and a computer-readable storage medium. When a usage region of an application on an electronic device changes, a version of the application can be automatically updated in time to a version in a current usage region of the application. Therefore, a user can enjoy a function of the application in the new region, thereby improving user experience.

According to a first aspect according to the invention, this application provides an application control method according to claim 1. The method is performed by an electronic device, and includes: determining that a usage region of a target application on the electronic device is switched from a first region to a second region, where a current version of the target application is a first version that matches the first region; obtaining first data, where the first data is used to change the first version of the target application to a second version, and the second version is a version that is of the target application and that matches the second region; and changing the version of the target application from the first version to the second version based on the first data. In this case, when a usage region of an application on the electronic device changes, the electronic device can automatically update in time a version of the application to a version in a current usage region of the application. Therefore, a user can enjoy a function of the application in the new region, thereby improving user experience.

According to the first aspect, before the obtaining first data, the method further includes: sending a region identifier of the second region to a server. In this case, the server can learn that the usage region of the target application on the electronic device is the second region, and can provide the first data for the electronic device.

According to the first aspect or any implementation of the first aspect, second data may include a first identifier of the target application. The first data includes a second identifier of the target application. The first identifier is the same as the second identifier. The second data is data required for obtaining the first version of the target application. In this case, when obtaining the first data, the electronic device can identify the target application of the first version and the target application of the second version as the same application, to change the version of the target application from the first version to the second version.

According to the first aspect or any implementation of the first aspect, the determining that a usage region of a target application on the electronic device is switched from a first region to a second region specifically includes one or more of the following: determining that a location of the electronic device is switched from the first region to the second region, or determining that a usage region in a system of the electronic device is switched from the first region to the second region, or determining that a usage region in an application store on the electronic device is switched from the first region to the second region. In this case, user requirements can be met in different usage scenarios, thereby improving user experience.

According to the first aspect or any implementation of the first aspect, the obtaining first data specifically includes: sending a data obtaining request to the server, where the data obtaining request is used to request to obtain the first data; and receiving the first data sent by the server. In this case, the electronic device may actively send the data obtaining request to the server, to obtain the first data.

According to the first aspect or any implementation of the first aspect, the changing the version of the target application from the first version to the second version specifically includes: deleting the target application of the first version, and replacing the target application of the first version with the target application of the second version, or upgrading the first version to the second version. In this case, the version of the target application is changed from the first version to the second version.

For example, "deleting the target application of the first version, and replacing the target application of the first version with the target application of the second version" may be understood as completely deleting the target application of the first version, and replacing the target application of the first version with the target application of the second version. For example, when the target application is an installation application, the target application of the first version may be uninstalled, and the target application of the second version may be installed.

For example, "upgrading the first version to the second version" may be understood as upgrading the first version by using the second version. In this case, all or a part of historical data in the first version may be reserved, all or a part of data of application code in the first version may be reserved, and/or the like.

According to the first aspect or any implementation of the first aspect, before the changing the version of the target application from the first version to the second version, the method further includes: determining that a target function is in an on state, where the target function is a function of automatically updating the target application when the usage region of the target application changes. In this case, the user can autonomously choose whether to automatically perform update, thereby improving user experience.

According to the first aspect or any implementation of the first aspect, the usage region may include one or more of the following: a city of a country, a country or region in the world, or another preset region. For example, the another preset region may be but is not limited to a user-defined region.

According to the first aspect or any implementation of the first aspect, the target application includes an installation application and/or a quick application. In addition, the target application may also include another type of application.

According to a second aspect according to the invention, this application provides an application control system according to claim 10. The system includes a server and an electronic device. The electronic device is configured to: when determining that a usage region of a target application on the electronic device is switched from a first region to a second region, obtain first data, and change a version of the target application from a first version to a second version based on the first data. The current version of the target application is the first version that matches the first region. The first data is used to change the first version of the target application to the second version. The second version is a version that is of the target application and that matches the second region. The server is configured to provide the first data for the electronic device. In this case, when a usage region of an application on the electronic device changes, the electronic device can automatically update in time a version of the application to a version in a current usage region of the application. Therefore, a user can enjoy a function of the application in the new region, thereby improving user experience.

According to the second aspect, the electronic device is further configured to: before obtaining the first data, send a region identifier of the second region to the server. The server is further configured to send the first data to the electronic device in response to the obtained region identifier of the second region. In this case, the server can learn that the usage region of the target application on the electronic device is the second region, and can actively push the first data to the electronic device.

According to the second aspect, the electronic device is further configured to: before obtaining the first data, send a data obtaining request to the server. The data obtaining request includes a region identifier of the second region. The data obtaining request is used to request to obtain the first data. The server is further configured to send the first data to the electronic device in response to the obtained data obtaining request. In this case, the server can learn that the usage region of the target application on the electronic device is the second region, and provide the first data for the electronic device when obtaining the data obtaining request sent by the electronic device.

According to the second aspect or any implementation of the second aspect, that the electronic device determines that the usage region of the target application on the electronic device is switched from the first region to the second region specifically includes one or more of the following: determining that a location of the electronic device is switched from the first region to the second region, or determining that a usage region in a system of the electronic device is switched from the first region to the second region, or determining that a usage region in an application store on the electronic device is switched from the first region to the second region. In this case, user requirements can be met in different usage scenarios, thereby improving user experience.

According to the second aspect or any implementation of the second aspect, that the electronic device changes the version of the target application from the first version to the second version specifically includes: deleting the target application of the first version, and replacing the target application of the first version with the target application of the second version, or upgrading the first version to the second version. In this case, the version of the target application is changed from the first version to the second version.

For example, "deleting the target application of the first version, and replacing the target application of the first version with the target application of the second version" may be understood as completely deleting the target application of the first version, and replacing the target application of the first version with the target application of the second version. For example, when the target application is an installation application, the target application of the first version may be uninstalled, and the target application of the second version may be installed.

For example, "upgrading the first version to the second version" may be understood as upgrading the first version by using the second version. In this case, all or a part of historical data in the first version may be reserved, all or a part of data of application code in the first version may be reserved, and/or the like.

According to the second aspect or any implementation of the second aspect, before changing the version of the target application from the first version to the second version, the electronic device is further configured to: determine that a target function is in an on state, where the target function is a function of automatically updating the target application when the usage region of the target application changes. In this case, the user can autonomously choose whether to automatically perform update, thereby improving user experience.

According to the second aspect or any implementation of the second aspect, the usage region may include one or more of the following: a city of a country, or a country or region in the world, or another preset region.

According to the second aspect or any implementation of the second aspect, the target application includes an installation application and/or a quick application. In addition, the target application may also include another type of application.

According to the second aspect or any implementation of the second aspect, second data includes a first identifier of the target application. The first data includes a second identifier of the target application. The first identifier is the same as the second identifier. The second data is data required for obtaining the first version of the target application. In this case, when obtaining the first data, the electronic device can identify the target application of the first version and the target application of the second version as the same application, to change the version of the target application from the first version to the second version.

According to a third aspect according to the invention, this application provides an electronic device. The electronic device includes a processor. The processor is coupled to a memory. The memory is configured to store a computer program or instructions. The processor is configured to execute the computer program or the instructions stored in the memory, so that the method in the first aspect is performed.

For example, the processor is configured to execute the computer program or the instructions stored in the memory, so that the electronic device performs the method in the first aspect.

According to a fourth aspect according to the invention, this application provides a computer-readable storage medium. The computer-readable storage medium stores a computer program (which may also be referred to instructions or code) used to implement the method in the first aspect.

For example, when the computer program is executed by a computer, the computer is enabled to perform the method in the first aspect.

According to a fifth aspect not claimed, this application provides a chip, including a processor. The processor is configured to read and execute a computer program stored in a memory, to perform the method in the first aspect.

Optionally, the chip further includes a memory. The memory is connected to the processor through a circuit or a wire.

According to a sixth aspect not claimed, this application provides a chip, including a processor. The processor is configured to read and execute a computer program stored in a memory, to perform the method in the first aspect.

Optionally, the chip further includes a memory. The memory is connected to the processor through a circuit or a wire.

According to a seventh aspect not claimed, this application provides a computer program product. The computer program product includes a computer program (which may also be referred to as instructions or code). When the computer program is executed by a computer, the computer is enabled to implement the method in the first aspect.

It may be understood that, for beneficial effect of the third aspect to the seventh aspect, reference may be made to related descriptions in the first aspect. Details are not described herein again.

### BRIEF DESCRIPTION OF DRAWINGS

FIG. 1a is a schematic diagram of an application scenario according to an embodiment of this application;
FIG. 1b is another schematic diagram of an application scenario according to an embodiment of this application;
FIG. 1c is still another schematic diagram of an application scenario according to an embodiment of this application;
FIG. 2 is a schematic diagram of a hardware structure of an electronic device according to an embodiment of this application;
FIG. 3 is a schematic flowchart of an application control method according to an embodiment of this application;
FIG. 4 is a schematic communication diagram of an application control method according to an embodiment of this application;
FIG. 5 is a schematic diagram of a control process of an application control method according to an embodiment of this application;
FIG. 6a is a schematic diagram of interface display of an electronic device according to an embodiment of this application;
FIG. 6b is another schematic diagram of interface display of an electronic device according to an embodiment of this application; and
FIG. 7 is a schematic diagram of a structure of a chip according to an embodiment of this application.

### DESCRIPTION OF EMBODIMENTS

To make the objectives, technical solutions, and advantages of embodiments of this application clearer, the following clearly and describes the technical solutions in embodiments of this application with reference to the accompanying drawings in embodiments of this application. It is clear that the described embodiments are merely some but not all of embodiments of this application. The scope of the invention is defined by the claims.

The term "and/or" in this specification describes an association relationship between associated objects and indicates that three relationships may exist. For example, A and/or B may indicate the following three cases: Only A exists, both A and B exist, and only B exists. The character "/" in this specification indicates an "or" relationship between associated objects. For example, A/B indicates A or B.

In the specification and claims of this specification, the terms "first", "second", and the like are intended to distinguish between different objects, but do not indicate a particular sequence of objects. For example, a first response message, a second response message, and the like are used to distinguish between different response messages, but do not indicate a particular sequence of the response messages.

In embodiments of this application, the word "example", "for example", or the like represents giving an example, an illustration, or a description. Any embodiment or design scheme described by using "example" or "for example" in embodiments of this application should not be construed as being more preferred or more advantageous than another embodiment or design scheme. To be precise, the word "example", "for example", or the like is intended to present a related concept in a specific manner.

In the descriptions of embodiments of this application, unless otherwise specified, "a plurality of" means two or more. For example, a plurality of processing units are two or more processing units, and a plurality of elements are two or more elements.

It should be noted that, when an application is used across regions (in other words, the application is used in different regions), an automatic update capability for a version in a region in which the application is located is usually absent. In this case, an application on an electronic device cannot be automatically updated to a version of the application in a new region. As a result, it is difficult for a user to enjoy a function of the APP in the new region when crossing regions. In an example, different regions may be different cities in a country, or different countries or regions in the world, or other different preset regions (for example, different user-defined regions), or the like.

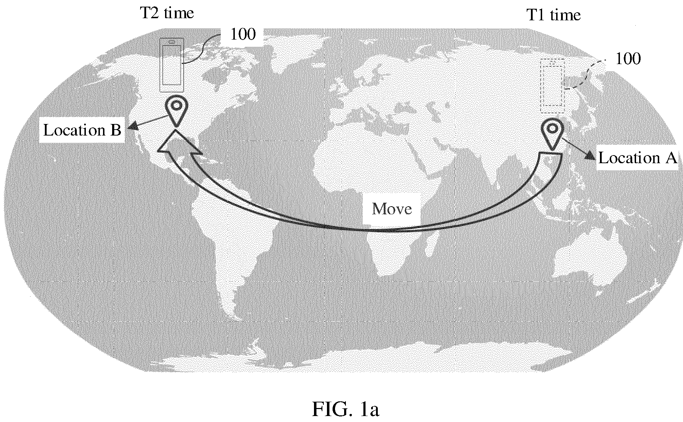

For example, FIG. 1a shows an application scenario. In the scenario shown in FIG. 1a, a developer may develop an application a. A version of the application a that is developed in a region in which a location A is located is a version 1. A version of the application a that is developed in a region in which a location B is located is a version 2. The application a of the version 1 and the application a of the version 2 have differences in functions. In this case, in the region in which the location A is located, a user may install the application a of the version 1 on the electronic device 100. In the region in which the location B is located, the user may install the application a of the version 2 on the electronic device 100. As shown in FIG. 1a, if the user is located at the location A at a time T1, the user may use the application a of the version 1 on the electronic device 100. When the user moves from the location A to the location B at a time T2, because the application a of the version 2 is not installed on the electronic device 100 at this time, it is difficult for the user to enjoy a function of the application a of the version 2.

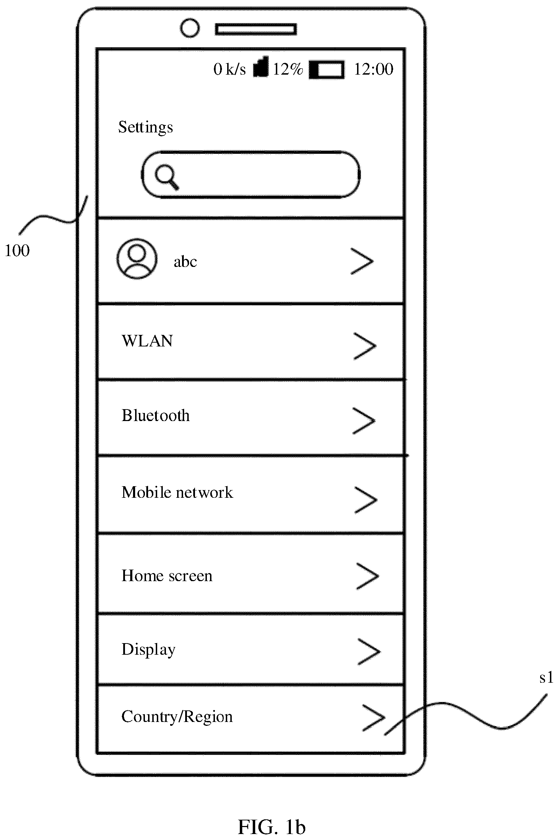

For example, FIG. 1b shows another application scenario. In the scenario shown in FIG. 1b, a developer may alternatively develop, as a version 1, a version of an application a in a region in which a location A is located; and develop, as a version 2, a version of the application a in a region in which a location B is located. The application a of the version 1 and the application a of the version 2 have differences in functions. In the region in which the location A is located, a user may install the application a of the version 1 on the electronic device 100. In the region in which the location B is located, the user may install the application a of the version 2 on the electronic device 100. As shown in FIG. 1b, the user may change, on the electronic device 100, a usage region (in other words, "Country/Region" shown in an area s1 in FIG. 1b) in a system of the electronic device 100, for example, switch the usage region from "China" to "United States". In this case, if the application a of the version 1 is installed on the electronic device 100 before the user changes the usage region, after the user changes the usage region, because the application a of the version 2 is not installed on the electronic device 100, it is difficult for the user to enjoy a function of the application a of the version 2.

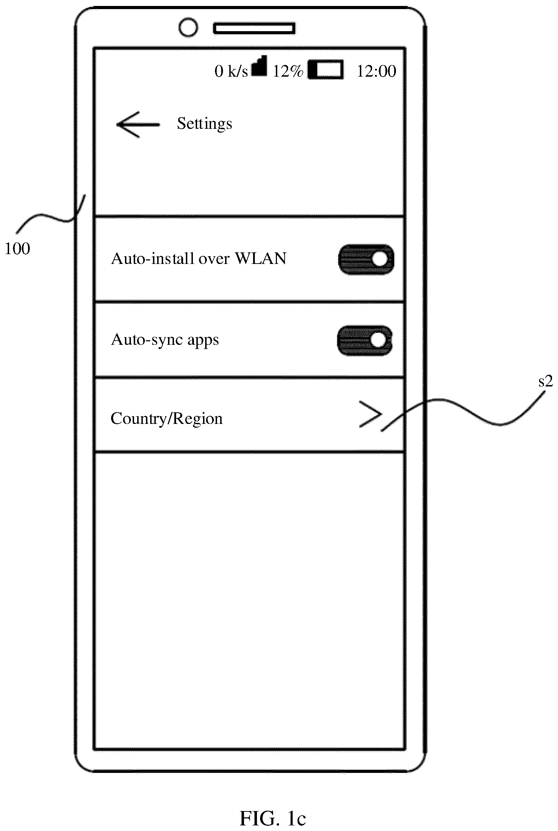

For example, FIG. 1c shows still another application scenario. In the scenario shown in FIG. 1c, a developer may alternatively develop, as a version 1, a version of an application a in a region in which a location A is located; and develop, as a version 2, a version of the application a in a region in which a location B is located. The application a of the version 1 and the application a of the version 2 have differences in functions. In the region in which the location A is located, a user may install the application a of the version 1 on the electronic device 100. In the region in which the location B is located, the user may install the application a of the version 2 on the electronic device 100. As shown in FIG. 1c, the user may change, on the electronic device 100, a usage region (in other words, "Country/Region" shown in an area s2 in FIG. 1b) in an application store on the electronic device 100, for example, switch the usage region from "China" to "United States". In this case, if the application a of the version 1 is installed on the electronic device 100 before the user changes the usage region in the application store, after the user changes the usage region in the application store, because the application a of the version 2 is not installed on the electronic device 100, it is difficult for the user to enjoy a function of the application a of the version 2. It may be understood that the application store on the electronic device 100 may provide, for the electronic device 100, an application that matches the system configured on the electronic device 100 and at least one of the following: a region in which the electronic device 100 is located, a region in a system of the electronic device 100, or a usage region in the application store.

Usually, the developer may separately publish versions of the application a in different regions as separate applications. In this way, the user can install both the application a of the version 1 and the application a of the version 2 on the electronic device 100. In this case, the user selects, based on different regions, applications of different versions for installation, so that when crossing regions, the user can use a function of an application of a version in a region in which the user is currently located. However in this manner, the user usually needs to manually perform switching for use, causing poor experience.

Further, to improve experience when the user uses the application on the electronic device across regions, an embodiment of this application further provides a solution. In this solution, when the electronic device learns that a usage region of the application on the electronic device changes, the electronic device may automatically update a version of the application on the electronic device to a version in a current usage region of the application. Therefore, the user can enjoy a function of the application in the new region, thereby improving user experience.

It may be understood that the electronic device in embodiments of this application may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not specially limited in embodiments of this application.

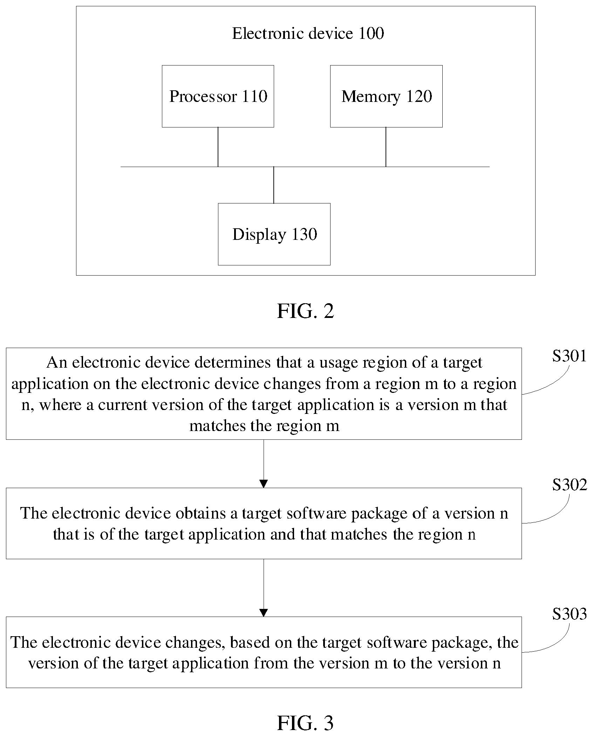

For example, FIG. 2 is a schematic diagram of a structure of an electronic device. As shown in FIG. 2, the electronic device 100 may include a processor 110, a memory 120, and a display 130. The processor 110, the memory 120, and the display 130 may be connected through a bus or in another manner.

The processor 110 is a computing core and a control core of the electronic device 100. The processor 110 may include one or more processing units. For example, the processor 110 may include one or more of: an application processor (application processor, AP), a modem (modem), a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The memory 120 may store a program. The program may be run by the processor 110, so that the processor 110 performs the method performed by the electronic device 100 provided in embodiments of this application. The memory 120 may further store data. The processor 110 may read the data stored in the memory 120. The memory 120 and the processor 110 may be separately disposed. Optionally, the memory 120 may be alternatively integrated into the processor 110.

The display 130 is configured to display an image, a video, and the like. The display 130 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some examples, the display 130 may be a touchscreen.

Optionally, the electronic device 100 may further include a positioning apparatus (not shown in the figure). The positioning apparatus may be configured to locate a location of the electronic device 100. For example, the positioning apparatus may be but is not limited to a global positioning system (global positioning system, GPS), or a BeiDou navigation satellite system (beidou navigation satellite system, BDS).

It may be understood that the structure shown in FIG. 2 in this embodiment does not constitute a specific limitation on the electronic device 100. In some other embodiments, the electronic device 100 may include more or fewer components than those shown in the figure, or combine some components, or split some components, or have different component arrangements. The illustrated components may be implemented by hardware, software, or a combination of software and hardware.

The following describes in detail the technical solutions of this application with reference to FIG. 3. For example, FIG. 3 is a schematic flowchart of an application control method. In FIG. 3, a target application may be installed on the electronic device 100, and a current usage region on the electronic device 100 is a region m. In this case, a version of the target application is a version m that matches the region m. For example, the target application on the electronic device 100 may be but is not limited to a social application, a video application, a news application, or a like application. As shown in FIG. 3, the application control method may include the following steps.

S301: The electronic device 100 determines that the usage region of the target application on the electronic device 100 changes from the region m to a region n. The current version of the target application is the version m that matches the region m.

Specifically, that the usage region of the target application on the electronic device 100 changes may include one or more of the scenarios described in FIG. 1a, FIG. 1b, and FIG. 1c. The electronic device 100 may determine but be not limited to determining, based on a case in which the usage region of the application changes in the scenarios described in FIG. 1a, FIG. 1b, and FIG. 1c, whether the usage region of the target application changes. It may be understood that, before step S301, the target application may be installed on the electronic device 100, the usage region of the target application is the region m, and the current version of the target application is the version m that matches the region m. For example, the target application includes an installation application and/or a quick application. In addition, the target application may also include another type of application. In an example, the region m may be referred to as a first region, the region n may be referred to as a second region, and the version m may be referred to as a first version.

For example, in the scenario shown in FIG. 1a, the electronic device 100 may determine, based on a location located by the positioning apparatus on the electronic device 100, whether the usage region of the target application changes from the region m to the region n. For example, it is assumed that the region m is China, and the region n is the United States. If the positioning apparatus on the electronic device 100 determines through positioning that the electronic device 100 is located in China at a time T1, and after a time T2, the positioning apparatus on the electronic device 100 determines through positioning that the electronic device 100 is located in the United States, the electronic device 100 may determine, at the time T2, that the usage region of the target application on the electronic device 100 changes from China to the United States.

For example, in the scenario shown in FIG. 1b, after a user changes a usage region in the system of the electronic device 100 from the current region m to the region n, the electronic device 100 may determine, based on a change operation performed by the user on the usage region in the system of the electronic device 100, that the usage region of the target application on the electronic device 100 changes from the region m to the region n.

For example, in the scenario shown in FIG. 1c, after the user changes a usage region in the application store on the electronic device 100 from the current region m to the region n, the electronic device 100 may determine, based on a change operation performed by the user on the usage region in the application store on the electronic device 100, that the usage region of the target application on the electronic device 100 changes from the region m to the region n.

S302: The electronic device 100 obtains a target software package of a version n that is of the target application and that matches the region n.

Specifically, after determining that the usage region on the electronic device 100 changes from the region m to the region n, the electronic device 100 may obtain, from an application provider (for example, the application store), the target software package of the version n that is of the target application and that matches the region n. In an example, the target software package may be understood as data required for changing the version m of the target application to the version n. The data may be referred to as first data. The version n may be referred to as a second version.

In a possible implementation, the electronic device 100 may send a first message to the application provider (for example, a server). The first message is used to request to obtain the target software package of the version n that is of the target application and that matches the region n. Then, the application provider may send, to the electronic device 100, the target software package of the version n that is of the target application and that matches the region n. In this case, the electronic device 100 obtains the target software package of the version n that is of the target application and that matches the region n. It may be understood that the application provider is mainly used to provide, for the electronic device 100, an application that matches the system and/or the usage region on the electronic device 100. In an example, the first message may be referred to as a data obtaining request.

Optionally, the application provider may have software packages of i versions of the target application in i regions, where i is a positive integer greater than or equal to 2. The software package of the target application of the application provider may carry a region identifier. The region identifier may be used to identify a region in which the software package can be installed. In addition, application identifiers corresponding to software packages of the target application in different regions are the same, so that the electronic device 100 subsequently identifies the software packages of the target application in the different regions as software packages of the same application, to update a version of the target application. For example, the application identifier may include one or more of: a developer signature, a package name of the software package, and the like.

In an example, the electronic device may send a region identifier of the region n to the application provider (for example, the server). Then, the application provider may actively send the target software package to the electronic device. In addition, the application provider may alternatively send the target software package to the electronic device after obtaining the data obtaining request sent by the electronic device.

S303: The electronic device 100 changes the version of the target application from the version m to the version n based on the target software package.

Specifically, after obtaining the target software package, the electronic device 100 may install the target software package, to change the version of the target application from the version m to the version n. For example, changing the version of the target application from the version m to the version n may be overwriting the version m of the target application by using the version n of the target application, or upgrading the version m of the target application to the version n. For example, "overwriting the version m of the target application by using the version n of the target application" may be understood as deleting the target application of the first version, and replacing the target application of the first version with the target application of the second version. For example, "deleting the target application of the first version, and replacing the target application of the first version with the target application of the second version" may be understood as completely deleting the target application of the first version, and replacing the target application of the first version with the target application of the second version. For example, when the target application is an installation application, the target application of the first version may be uninstalled, and the target application of the second version may be installed. For example, "upgrading the first version to the second version" may be understood as upgrading the first version by using the second version. In this case, all or a part of historical data in the first version may be reserved, all or a part of data of application code in the first version may be reserved, and/or the like.

For example, when installing the target software package, the electronic device 100 may check the target software package to determine whether an application corresponding to the target software package is the target application, and install the target software package when determining that the application corresponding to the target software package is the target application, to change the version of the target application from the version m to the version n. In an example, the electronic device 100 may check the target software package based on the application identifier corresponding to the target software package. For example, when the application identifier corresponding to the target software package includes the developer signature and the package name of the software package, if both the developer signature and the package name of the software package indicate that the application corresponding to the target software package is the target application, the application corresponding to the target software package may be determined as the target application.

In an example, when the target software package is understood as data required for changing the version m of the target application to the version n, and the data is referred to as the first data, the application identifier included in the target software package may be referred to as a second identifier. In addition, the software package that is of the target application and that corresponds to the version m may be understood as data required for obtaining the version m of the target application. The data may be referred to as second data. The second data may include an identifier of the target application. The identifier may be referred to as a first identifier. The first identifier and the second identifier may be the same.

Therefore, when the electronic device learns that a usage region of an application on the electronic device changes, the electronic device may automatically obtain a software package of the application of a version that matches a current usage region of the application, and install the software package, to update a version of the application on the electronic device to the version of the current usage region of the application on the electronic device. Therefore, the user can enjoy a function of the application in the new region, thereby improving user experience.

The foregoing is a related description of the application control method provided in embodiments of this application. For ease of understanding, the following uses an example in which an application provider is an application store and the application store is configured on the electronic device 100 for description.

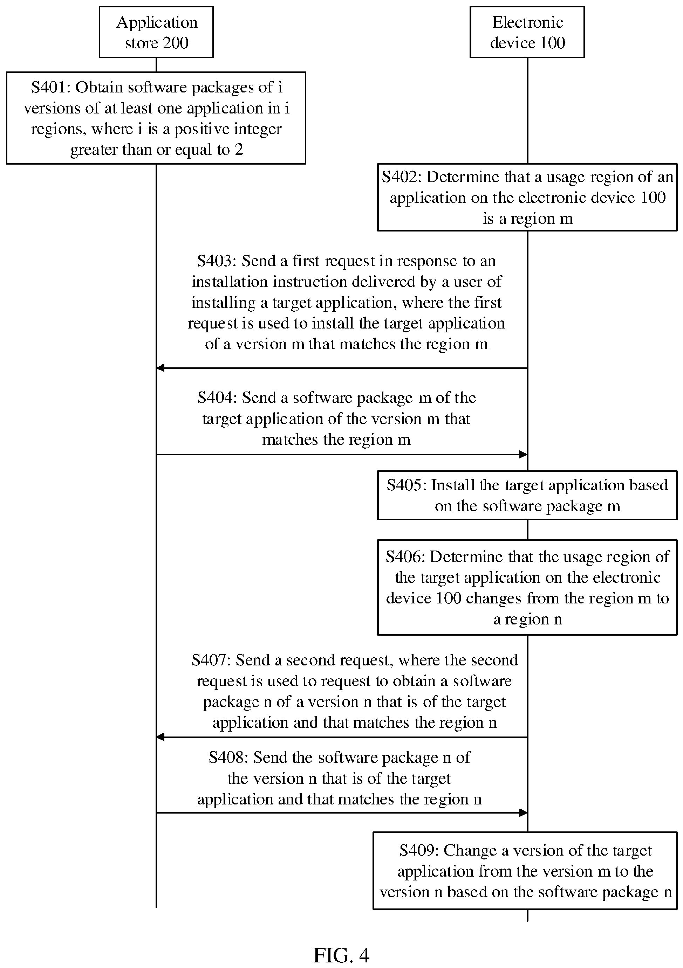

For example, FIG. 4 is a schematic communication diagram of an application control method. It may be understood that an application store 200 shown in FIG. 4 may be replaced with another device (for example, a server) or an application that has a function of the application store 200. A technical solution obtained after the replacement also falls within the scope of this application. As shown in FIG. 4, the application control method may include the following steps.

S401: The application store 200 obtains software packages of i versions of at least one application in i regions, where i is a positive integer greater than or equal to 2.

Specifically, a developer may publish the application in the application store 200. When the developer publishes, in the application store 200, the software packages of the i versions of the at least one application in the i regions, the application store 200 can obtain the software packages of the i versions of the at least one application in the i regions, where i is a positive integer greater than or equal to 2.

For example, a usage region of the application may include domestic and international. In this case, a version of the application developed by the developer may include a domestic version and an international version, and functions of the two versions are different. The domestic version may be used domestically, and the international version may be used internationally. After the developer publishes software packages of the domestic version and the international version of the application in the application store 200, the application store 200 obtains the software package of the application of the domestic version and the software package of the application of the international version.

In an example, the software package of the application may carry a region identifier. The region identifier may be used to identify a region in which the software package can be installed. In addition, application identifiers corresponding to the software packages of the application in different regions are the same, so that the electronic device 100 subsequently identifies the software packages of the application in different regions as software packages of the same application and further updates the application to a new version. For example, the application identifier may include one or more of: a developer signature, a package name of the software package, and the like.

S402: The electronic device 100 determines that a usage region of the application on the electronic device 100 is a region m.

Specifically, the electronic device 100 may determine, based on a location located by a positioning apparatus on the electronic device 100, that the usage region of the application on the electronic device 100 is the region m. In addition, the electronic device 100 may alternatively determine, based on a change operation performed by a user on a usage region in a system of the electronic device 100, that the usage region of the application on the electronic device 100 is the region m. In addition, the electronic device 100 may alternatively determine, based on a change operation performed by a user on a usage region in the application store on the electronic device 100, that the usage region of the application on the electronic device 100 is the region m.

S403: The electronic device 100 sends a first request to the application store 200 in response to an installation instruction delivered by the user of installing a target application. The first request is used to install the target application of a version m that matches the region m.

Specifically, the user may search the application store 200 for the target application, and choose to install the target application. After the user chooses to install the target application, the electronic device 100 obtains the installation instruction delivered by the user of installing the target application. In this case, the electronic device 100 may send the first request to the application store 200. The first request is used to install the target application of the version that matches the region m.

S404: In response to the first request, the application store 200 sends, to the electronic device, a software package m of the target application of the version m that matches the region m.

Specifically, after the application store obtains the first request sent by the electronic device 100, the application store 200 may find, from the applications that have been published in the application store 200, the software package m of the version m that is of the target application and that matches the region m, and send the software package m to the electronic device 100.

S405: The electronic device 100 installs the target application based on the software package m.

Specifically, after obtaining the software package m of the target application that is of the version m and that matches the region m, the electronic device 100 may install the target application by using the software package m.

S406: The electronic device 100 determines that the usage region of the target application on the electronic device 100 changes from the region m to a region n.

Specifically, that the usage region of the target application on the electronic device 100 changes may include one or more of the scenarios described in FIG. 1a, FIG. 1b, and FIG. 1c. The electronic device 100 may determine but be not limited to determining, based on a case in which the usage region of the application changes in the scenarios described in FIG. 1a, FIG. 1b, and FIG. 1c, whether the usage region of the target application changes.

For example, in the scenario shown in FIG. 1a, the electronic device 100 may determine, based on a location located by a positioning apparatus on the electronic device 100, whether the usage region of the target application changes from the region m to the region n. For example, it is assumed that the region m is China, and the region n is the United States. If the positioning apparatus on the electronic device 100 determines through positioning that the electronic device 100 is located in China at a time T1, and after a time T2, the positioning apparatus on the electronic device 100 determines through positioning that the electronic device 100 is located in the United States, the electronic device 100 may determine, at the time T2, that the usage region of the target application on the electronic device 100 changes from China to the United States.

For example, in the scenario shown in FIG. 1b, after the user changes the usage region in the system of the electronic device 100 from the current region m to the region n, the electronic device 100 may determine, based on a change operation performed by the user on the usage region in the system of the electronic device 100, that the usage region of the target application on the electronic device 100 changes from the region m to the region n.

For example, in the scenario shown in FIG. 1c, after the user changes the usage region in the application store on the electronic device 100 from the current region m to the region n, the electronic device 100 may determine, based on a change operation performed by the user on the usage region in the application store on the electronic device 100, that the usage region of the target application on the electronic device 100 changes from the region m to the region n.

S407: The electronic device 100 sends a second request to the application store 200. The second request is used to request to obtain a software package n of a version n that is of the target application and that matches the region n.

Specifically, after the electronic device 100 determines that the usage region of the target application on the electronic device 100 changes from the region m to the region n, the electronic device 100 may send the second request to the application store 200. The second request may be used to request to obtain the software package n of the version n that is of the target application and that matches the region n.

For example, before sending the second request to the application store 200, the electronic device 100 may run a related application scanning function to obtain information about an application file installed on the electronic device 100. The information about the application file may include a name, an icon, an application identifier, and the like of an application. Therefore, the application that has been installed on the electronic device 100 is determined based on the information about the application file. It may be understood that when a plurality of applications are installed on the electronic device 100, the second request is used by the user to request to obtain a software package of a version n that is of each of the plurality of applications and that matches the region n. For example, the second request may carry a region identifier of the region n.

S408: In response to the obtained second request, the application store 200 sends, to the electronic device 100, the software package n of the version n that is of the target application and that matches the region n.

Specifically, after the application store obtains the second request sent by the electronic device 100, the application store 200 directly finds, from the applications that have been published in the application store 200, the software package n of the version n that is of the target application and that matches the region n, and sends the software package n to the electronic device 100. An application identifier of the software package n is the same as that of the software package m.

In addition, the application store 200 may first find the target application from the applications that have been published in the application store 200, and then obtain, based on region identifiers corresponding to software packages of the target application in different regions, the software package n of the version n that is of the target application and that matches the region n.

S409: The electronic device 100 changes the version of the target application from the version m to the version n based on the software package n.

Specifically, after obtaining the software package n, the electronic device 100 may install the software package n, to change the version of the target application from the version m to the version n.

For example, when installing the software package n, the electronic device 100 may check the software package n to determine whether an application corresponding to the software package n is the target application, and install the software package n when determining that the application corresponding to the software package n is the target application, to change the version of the target application from the version m to the version n. In an example, the electronic device 100 may check the software package n based on the application identifier corresponding to the software package n. For example, when the application identifier corresponding to the software package n includes a developer signature and a package name of the software package, if both the developer signature and the package name of the software package indicate that the application corresponding to the software package n is the target application, the application corresponding to the software package n may be determined as the target application. In an example, the application identifier of the software package n is the same as that of the software package m, so that the electronic device 100 determines that applications corresponding to the two software packages are the same application.

It may be understood that sequence numbers of the steps do not mean execution sequences in the foregoing embodiments. The execution sequences of the processes should be determined based on functions and internal logic of the processes, and should not be construed as any limitation on the implementation processes of embodiments of the present invention. In addition, in some possible implementations, the steps in the foregoing embodiments may be selectively performed based on an actual situation. This is not limited herein.

The foregoing is a related description and an example description of the application control method provided in embodiments of this application. For ease of understanding, the following continues to describe the application control method provided in embodiments of this application by using an example.

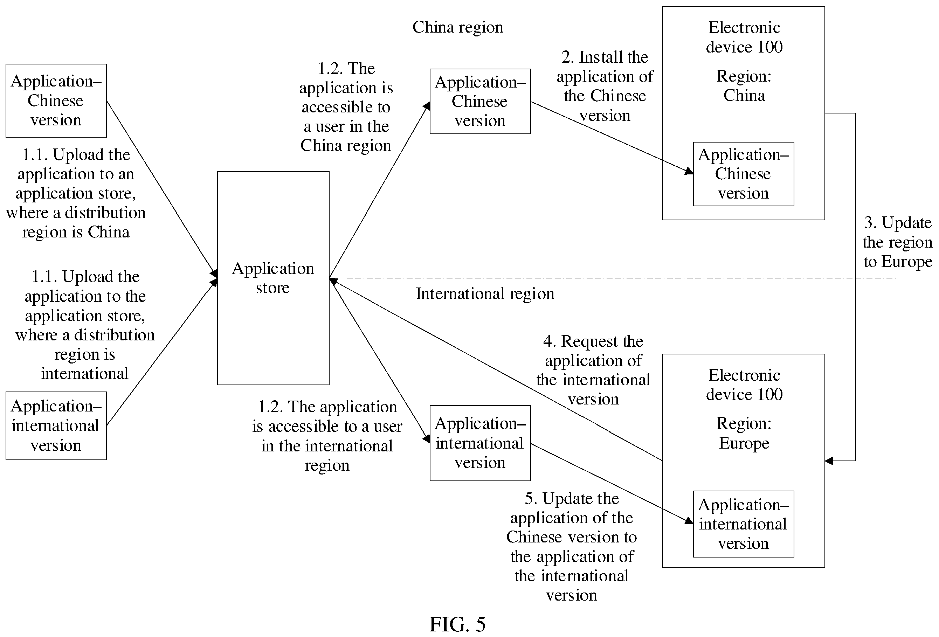

For example, FIG. 5 is a schematic diagram of a control process of an application control method. In FIG. 5, an example in which software includes a Chinese version and an international version is used for description. In addition, in FIG. 5, the electronic device 100 has a region listening module and an installer module. The region listening module is configured to listen to a region change event on the electronic device 100. The installer module is configured to: scan whether a version that matches a current region exists for an application that has been installed on the electronic device 100, and install an application.

As shown in FIG. 5, the control process of the application control method is specifically as follows:
(1) Two versions (to be specific, the Chinese version and the international version) of an application are published by a developer in an application store.

During application development, the developer may develop, based on different regions, an application version that matches a corresponding region, for example, develop the Chinese version and the international version of the application. Then, the developer may upload software packages respectively corresponding to the Chinese version and the international version of the application to the application store.

The developer may add a region identifier to the software package of the application. In this case, after obtaining the software package uploaded by the developer, the application store may recognize, based on the region identifier, a region that matches a version that is of the application and that corresponds to the software package.

For example, in the application store, different software repositories may be allocated to different regions. For example, a China region software repository is allocated to a China region, and an international region software repository is allocated to an international region. After obtaining the software package, the application store may distribute the software package to a software repository in a corresponding region based on the region identifier carried in the software package.

In addition, the application store may alternatively distribute, to a same software repository, the software packages of versions that match different regions. In this case, when obtaining an application obtaining request sent by the electronic device, the application store may search the software repository of the application store based on a region in which the electronic device is currently located, to find a software package of a version that matches the region in which the electronic device is currently located.

For example, application identifiers corresponding to the software packages of the application in different regions are the same, so that the electronic device subsequently identifies, as software packages of the same application, the software packages that are of application and that match different regions and further updates the application. For example, the application identifier may include one or more of: a developer signature, a package name of the software package, and the like.

It may be understood that the application store may present, to a user based on a usage region on the electronic device, an application of a version that matches the current usage region. In this case, the user can install the application that matches a requirement of the usage region, and use the application.

For example, when the usage region on the electronic device is China, the application store presents the Chinese version of the application to the user. When the usage region on the electronic device is international, the application store presents the international version of the application to the user.

Optionally, when the application store presents, to the user, the application of the version that matches the current usage region, only the application of the version that matches the current usage region may be displayed, and the application of the version that matches a region other than the current usage region may not be displayed. For example, when the usage region is China, the application store presents only the application of the Chinese version to the user, and does not present the application of the international version to the user.

(2) The application is installed when the usage region on the electronic device 100 is "China".

Specifically, when the application is installed, the user may search the application store on the electronic device 100 for the application. Because the current usage region on the electronic device 100 is China, the region listening module on the electronic device 100 may detect that the current usage region on the electronic device 100 is China. In this case, the region listening module may send region information to the application store. Then, the application store may present the Chinese version of the application to the user. Next, after the user delivers an instruction for installing the application, the application store may send the software package of the Chinese version of the application to the electronic device 100. After the electronic device 100 receives the software package of the Chinese version of the application, the installer module on the electronic device 100 may install the Chinese version of the application.

(3) The usage region on the electronic device 100 changes from "China" to "Europe".

Specifically, after the usage region on the electronic device 100 changes from "China" to "Europe", the region listening module on the electronic device 100 may detect that the current usage region on the electronic device 100 is Europe. In this case, the region listening module determines that the usage region on the electronic device 100 changes. Then, the region listening module sends information about a region change to the installer module. In this case, the installer module may scan the application that has been installed on the electronic device 100. Next, the installer module interacts with the application store to obtain the software package of the international version of the application scanned by the installer module. Finally, the installer module updates the Chinese version of the application to the international version. In this case, the electronic device 100 automatically updates the version of the application on the electronic device 100 to the version in the current usage region of the application. Therefore, the user can enjoy a function of the application in the new region, thereby improving user experience.

It may be understood that a process of installing the application when the usage region on the electronic device 100 is "Europe" is similar to a process of installing the application when the usage region on the electronic device 100 is "China". For details, refer to descriptions of the process of installing the application when the usage region on the electronic device 100 is "China". Details are not described herein again. In addition, a process of updating the application when the usage region on the electronic device 100 changes from "Europe" to "China" is similar to a process of updating the application when the usage region on the electronic device 100 changes from "China" to "Europe". For details, refer to descriptions of the process of updating the application when the usage region on the electronic device 100 changes from "China" to "Europe". Details are not described herein again.

It may be understood that an application update button may be set on the electronic device 100. When the application update button is in an on state, the electronic device 100 may automatically update the application based on the usage region of the application on the electronic device 100. For example, the application update button may switch a state of the application update button from an off state to the on state after the electronic device 100 receives an enabling operation delivered by the user.

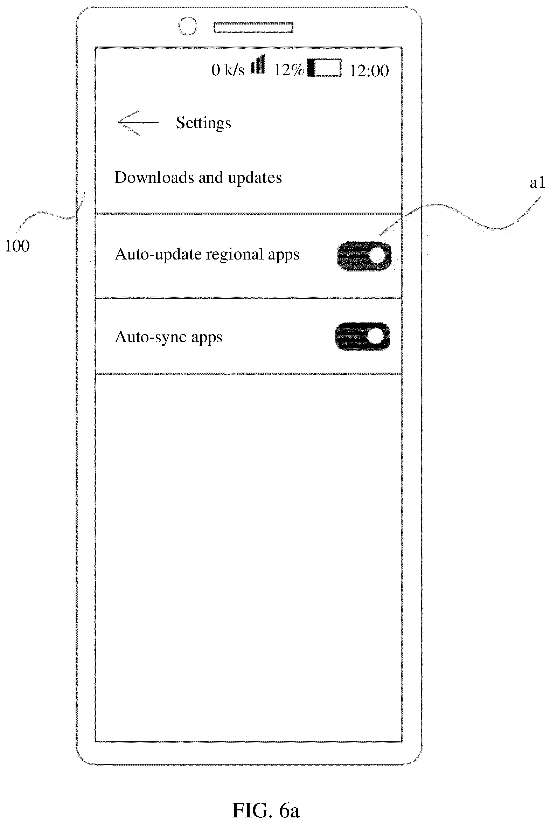

For example, the application update button may be disposed in the application store configured on the electronic device 100. For example, as shown in FIG. 6a, an "Auto-update regional apps" application update button may be set in settings of the application store on the electronic device 100, namely, content shown in an area a1. In this case, the user may choose, in the region a1, whether to enable automatic update.

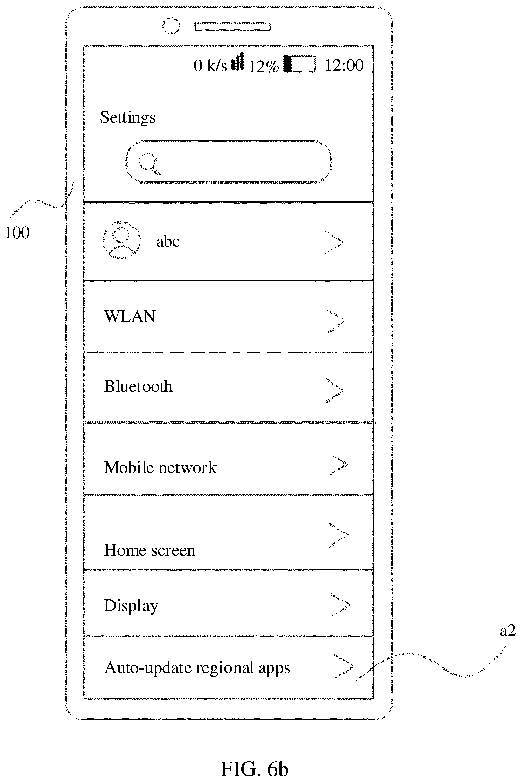

In addition, the application update button may be set in a system setting option of the electronic device 100. For example, as shown in FIG. 6b, an "Auto-update regional apps" application update button may be set in system settings on the electronic device 100, namely, content shown in an area a2. In this case, the user may choose whether to enable automatic update by entering "Auto-update regional apps".

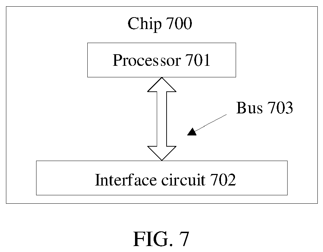

According to the method in the foregoing embodiments, an embodiment of this application further provides a chip. FIG. 7 is a schematic diagram of a structure of a chip according to an embodiment of this application. As shown in FIG. 7, a chip 700 includes one or more processors 701 and an interface circuit 702. Optionally, the chip 700 may further include a bus 703.

The processor 701 may be an integrated circuit chip and has a signal processing capability. In an implementation process, the steps in the foregoing methods may be completed by using a hardware integrated logic circuit in the processor 701 or instructions in a software form. The processor 701 may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods and the steps that are disclosed in embodiments of this application. The general-purpose processor may be a microprocessor, or the processor may be any conventional processor or the like. The interface circuit 702 may be configured to send or receive data, instructions, or information. The processor 701 may process the data, the instructions, or other information received by using the interface circuit 702, and send, by using the interface circuit 702, processed information.

Optionally, the chip further includes a memory. The memory may include a read-only memory and a random access memory, and provide operation instructions and data for the processor. A part of the memory may further include a nonvolatile random access memory (NVRAM). Optionally, the memory stores an executable software module or a data structure, and the processor may perform a corresponding operation by invoking operation instructions (the operation instructions may be stored in an operating system) stored in the memory.

Optionally, the interface circuit 702 may be configured to output an execution result of the processor 701.

It should be noted that functions corresponding to each of the processor 701 and the interface circuit 702 may be implemented by using a hardware design, or may be implemented by using a software design, or may be implemented by using a combination of software and hardware. This is not limited herein.

It should be understood that the steps in the foregoing method embodiments may be completed by using a logic circuit in a hardware form or instructions in a software form in the processor. The chip may be applied to the electronic device 100, to implement the methods provided in embodiments of this application.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, the storage medium is coupled to the processor, so that the processor can read information from the storage medium and write information into the storage medium. Certainly, the storage medium may be alternatively a component of the processor. The processor and the storage medium may be disposed in an ASIC.

All or some of the foregoing embodiments may be implemented by software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, all or some procedures or functions in embodiments of this application are generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

It may be understood that various numbers in embodiments of this application are merely used for differentiation for ease of description, and are not used to limit the scope of embodiments of this application.

## Claims

1. An application control method, performed by an electronic device (100), wherein the method comprises:
determining (S301) that a usage geographical region of a target application on the electronic device is switched from a first geographical region to a second geographical region, wherein a current version of the target application is a first version that matches the first geographical region, wherein determining comprises listening, by a region listening module of the electronic device (100) to a geographical region change event on the electronic device (100) and sending information about a geographical region change to an installer module of the electronic device (100);
obtaining (S302) first data, wherein the first data is used to change the first version of the target application to a second version, and the second version is a version that is of the target application and that matches the second geographical region, wherein obtaining comprises interacting, by the installer module, with a server to obtain the first data; and
changing (S303) the version of the target application from the first version to the second version based on the first data.

2. The method according to claim 1, wherein before the obtaining first data, the method further comprises:
sending a region identifier of the second geographical region to the server.

3. The method according to claim 1 or 2, wherein second data comprises a first identifier of the target application, the first data comprises a second identifier of the target application, the first identifier is the same as the second identifier, and the second data is data required for obtaining the first version of the target application.

4. The method according to any one of claims 1 to 3, wherein the determining that a usage geographical region of a target application on the electronic device is switched from a first geographic region to a second geographic region specifically comprises one or more of the following:
determining that a location of the electronic device is switched from the first geographical region to the second geographical region, or determining that a usage geographical region the electronic device is switched from the first geographical region to the second geographical region, or determining that a usage geographical region in an application store on the electronic device is switched from the first geographical region to the second geographical region.

5. The method according to any one of claims 1 to 4, wherein the obtaining first data specifically comprises:
sending a data obtaining request to the server, wherein the data obtaining request is used to request to obtain the first data; and
receiving the first data sent by the server.

6. The method according to any one of claims 1 to 5, wherein the changing the version of the target application from the first version to the second version specifically comprises:
deleting the target application of the first version, and replacing the target application of the first version with the target application of the second version, or upgrading the first version to the second version.

7. The method according to any one of claims 1 to 6, wherein before the changing the version of the target application from the first version to the second version, the method further comprises:
determining whether a target function is in an on state, wherein the target function is a function of automatically updating the target application when the usage geographical region of the target application changes.

8. The method according to any one of claims 1 to 7, wherein the usage geographical region comprises one or more of the following:
a city of a country, or a country or region in the world, or another preset geographical region.

9. The method according to any one of claims 1 to 8, wherein the target application comprises an installation application and/or a quick application.

10. An application control system, comprising a server and an electronic device (100), wherein the electronic device (100) is configured to:
if determining that a usage geographical region of a target application on the electronic device (100) is switched from a first geographical region to a second geographical region, comprises listening, by a region listening module of the electronic device (100) to a geographical region change event on the electronic device (100) and sending information about a geographical region change to an installer module of the electronic device (100),
obtain first data comprising interact, by the installer module, with the server to obtain the first data, and
change a version of the target application from a first version to a second version based on the first data, wherein the current version of the target application is the first version that matches the first geographical region, the first data is used to change the first version of the target application to the second version, and the second version is a version that is of the target application and that matches the second geographical region; and
the server is configured to provide the first data for the electronic device.

11. The system according to claim 10, wherein
the electronic device (100) is further configured to: before obtaining the first data, send a region identifier of the second geographical region to the server; and
the server is further configured to send the first data to the electronic device (100) in response to the obtained region identifier of the second geographical region.

12. The system according to claim 10, wherein
the electronic device (100) is further configured to: before obtaining the first data, send a data obtaining request to the server, wherein the data obtaining request comprises a region identifier of the second geographical region, and the data obtaining request is used to request to obtain the first data; and
the server is further configured to send the first data to the electronic device (100) in response to the obtained data obtaining request.

13. The system according to any one of claims 10 to 12, wherein that the electronic device (100) determines that the usage geographical region of the target application on the electronic device is switched from the first geographical region to the second geographical region specifically comprises one or more of the following:
determining that a location of the electronic device (100) is switched from the first geographical region to the second geographical region, or determining that a usage geographical region of the electronic device is switched from the first geographical region to the second geographical region, or determining that a usage geographical region in an application store on the electronic device (100) is switched from the first geographical region to the second geographical region.

14. An electronic device (100), comprising:
at least one memory (120), configured to store a program; and
at least one processor (130), configured to execute the program stored in the memory, wherein when the program stored in the memory is executed, the processor (130) is configured to perform the method according to any one of claims 1 to 9.

15. A computer-readable storage medium, wherein the computer-readable storage medium stores a computer program, and when the computer program is run on an electronic device (100), the electronic device is enabled to perform the method according to any one of claims 1 to 9.

## Patentansprüche

1. Anwendungssteuerungsverfahren, das durch eine elektronische Vorrichtung (100) durchgeführt wird, wobei das Verfahren Folgendes umfasst:
Bestimmen (S301), dass eine geografische Region der Nutzung einer Zielanwendung auf der elektronischen Vorrichtung von einer ersten geografischen Region auf eine zweite geografische Region umgeschaltet wird, wobei eine aktuelle Version der Zielanwendung eine erste Version ist, die mit der ersten geografischen Region übereinstimmt, wobei das Bestimmen das Abhören eines Änderungsereignisses der geografischen Region auf der elektronischen Vorrichtung (100) durch ein Regionsabhörmodul der elektronischen Vorrichtung (100) und das Senden von Informationen über eine Änderung der geografische Region an ein Installationsmodul der elektronischen Vorrichtung (100) umfasst;
Erlangen (S302) erster Daten, wobei die ersten Daten verwendet werden, um die erste Version der Zielanwendung in eine zweite Version zu ändern, und die zweite Version eine Version ist, die von der Zielanwendung stammt und die mit der zweiten geografischen Region übereinstimmt, wobei das Erlangen das Interagieren des Installationsmoduls mit einem Server umfasst, um die ersten Daten zu erlangen; und
Ändern (S303) der Version der Zielanwendung von der ersten Version in die zweite Version basierend auf den ersten Daten.

2. Verfahren nach Anspruch 1, wobei das Verfahren vor dem Erlangen der ersten Daten ferner Folgendes umfasst:
Senden einer Regionskennung der zweiten geografischen Region an den Server.

3. Verfahren nach Anspruch 1 oder 2, wobei die zweiten Daten eine erste Kennung der Zielanwendung umfassen, die ersten Daten eine zweite Kennung der Zielanwendung umfassen, die erste Kennung dieselbe wie die zweite Kennung ist und die zweiten Daten Daten sind, die zum Erlangen der ersten Version der Zielanwendung erforderlich sind.

4. Verfahren nach einem der Ansprüche 1 bis 3, wobei das Bestimmen, dass eine geografische Region der Nutzung einer Zielanwendung auf der elektronischen Vorrichtung von einer ersten geografischen Region auf eine zweite geografische Region umgeschaltet wird, insbesondere eines oder mehrere der folgenden Elemente umfasst:
Bestimmen, dass eine Position der elektronischen Vorrichtung von der ersten geografischen Region auf die zweite geografische Region umgeschaltet wird, oder Bestimmen, dass die geografische Region der Nutzung der elektronischen Vorrichtung von der ersten geografischen Region auf die zweite geografische Region umgeschaltet wird, oder Bestimmen, dass die geografische Region der Nutzung in einem Application-Store auf der elektronischen Vorrichtung von der ersten geografischen Region auf die zweite geografische Region umgeschaltet wird.

5. Verfahren nach einem der Ansprüche 1 bis 4, wobei das Erlangen erster Daten insbesondere Folgendes umfasst:
Senden einer Anfrage zur Datenerfassung an den Server, wobei die Anfrage zur Datenerfassung verwendet wird, um die ersten Daten zu erlangen; und
Empfangen der ersten Daten, die durch den Server gesendet werden.

6. Verfahren nach einem der Ansprüche 1 bis 5, wobei das Ändern der Version der Zielanwendung von der ersten Version in die zweite Version insbesondere Folgendes umfasst:
Löschen der Zielanwendung der ersten Version und Ersetzen der Zielanwendung der ersten Version durch die Zielanwendung der zweiten Version oder Aktualisieren der ersten Version auf die zweite Version.

7. Verfahren nach einem der Ansprüche 1 bis 6, wobei das Verfahren vor dem Ändern der Version der Zielanwendung von der ersten Version in die zweite Version ferner Folgendes umfasst:
Bestimmen, ob sich eine Zielfunktion in einem eingeschalteten Zustand befindet, wobei die Zielfunktion eine Funktion zum automatischen Aktualisieren der Zielanwendung ist, wenn sich die geografische Nutzungsregion der Zielanwendung ändert.

8. Verfahren nach einem der Ansprüche 1 bis 7, wobei die geografische Region der Nutzung eines oder mehrere der folgenden Gebiete umfasst:
eine Stadt eines Landes oder ein Land oder eine Region in der Welt oder eine andere vordefinierte geografische Region.

9. Verfahren nach einem der Ansprüche 1 bis 8, wobei die Zielanwendung eine Installationsanwendung und/oder eine Schnellanwendung umfasst.

10. Anwendungssteuerungssystem, umfassend einen Server und eine elektronische Vorrichtung (100), wobei
die elektronische Vorrichtung (100) dazu konfiguriert ist:
beim Bestimmen, dass eine geografische Region der Nutzung einer Zielanwendung auf der elektronischen Vorrichtung (100) von einer ersten geografischen Region auf eine zweite geografische Region umgeschaltet wird, das Abhören eines Änderungsereignisses der geografischen Region auf der elektronischen Vorrichtung (100) durch ein Regionsabhörmodul der elektronischen Vorrichtung (100) und das Senden von Informationen über eine Änderung der geografische Region an ein Installationsmodul der elektronischen Vorrichtung (100) umfasst,
erste Daten zu erlangen, umfassend Interagieren des Installationsmoduls mit dem Server, um die ersten Daten zu erlangen, und
eine Version der Zielanwendung von einer ersten Version in eine zweite Version basierend auf den ersten Daten zu ändern, wobei die aktuelle Version der Zielanwendung die erste Version ist, die mit der ersten geografischen Region übereinstimmt, die ersten Daten verwendet werden, um die erste Version der Zielanwendung in die zweite Version zu ändern, und die zweite Version eine Version ist, die von der Zielanwendung stammt und die mit der zweiten geografischen Region übereinstimmt; und
der Server dazu konfiguriert ist, die ersten Daten für die elektronische Vorrichtung bereitzustellen.

11. System nach Anspruch 10, wobei
die elektronische Vorrichtung (100) ferner dazu konfiguriert ist: vor dem Erlangen der ersten Daten eine Regionskennung der zweiten geografischen Region an den Server zu senden; und
der Server ferner dazu konfiguriert ist, die ersten Daten als Reaktion auf die erlangte Regionskennung der zweiten geografischen Region an die elektronische Vorrichtung (100) zu senden.

12. System nach Anspruch 10, wobei
die elektronische Vorrichtung (100) ferner dazu konfiguriert ist: vor dem Erlangen der ersten Daten eine Anfrage zur Datenerfassung an den Server zu senden, wobei die Anfrage zur Datenerfassung eine Regionskennung der zweiten geografischen Region umfasst, und die Anfrage zur Datenerfassung verwendet wird, um die ersten Daten zu erlangen; und
der Server ferner dazu konfiguriert ist, die ersten Daten als Reaktion auf die erlangte Anfrage zur Datenerfassung an die elektronische Vorrichtung (100) zu senden.

13. System nach einem der Ansprüche 10 bis 12, wobei der Umstand, dass die elektronische Vorrichtung (100) bestimmt, dass die geografische Region der Nutzung der Zielanwendung auf der elektronischen Vorrichtung von der ersten geografischen Region auf die zweite geografische Region umgeschaltet wird, insbesondere eines oder mehrere der folgenden Elemente umfasst: Bestimmen, dass eine Position der elektronischen Vorrichtung (100) von der ersten geografischen Region auf die zweite geografische Region umgeschaltet wird, oder Bestimmen, dass die geografische Region der Nutzung der elektronischen Vorrichtung von der ersten geografischen Region auf die zweite geografische Region umgeschaltet wird, oder Bestimmen, dass die geografische Region der Nutzung in einem Application-Store auf der elektronischen Vorrichtung (100) von der ersten geografischen Region auf die zweite geografische Region umgeschaltet wird.

14. Elektronische Vorrichtung (100), umfassend:
mindestens einen Speicher(120), der dazu konfiguriert ist, ein Programm zu speichern; und
mindestens einen Prozessor (130), der dazu konfiguriert ist, das in dem Speicher gespeicherte Programm auszuführen, wobei, wenn das in dem Speicher gespeicherte Programm ausgeführt wird, der Prozessor (130) dazu konfiguriert ist, das Verfahren nach einem der Ansprüche 1 bis 9 durchzuführen.

15. Computerlesbares Speichermedium, wobei das computerlesbare Speichermedium ein Computerprogramm speichert, und, wenn das Computerprogramm auf einer elektronischen Vorrichtung (100) ausgeführt wird, die elektronische Vorrichtung in die Lage versetzt wird, das Verfahren nach einem der Ansprüche 1 bis 9 durchzuführen.

## Revendications

1. Procédé de commande d'application, réalisé par un dispositif électronique (100), dans lequel le procédé comprend :
la détermination (S301) qu'une région géographique d'utilisation d'une application cible sur le dispositif électronique est commutée d'une première région géographique à une seconde région géographique, dans lequel une version actuelle de l'application cible est une première version qui correspond à la première région géographique, dans lequel la détermination comprend l'écoute, par un module d'écoute de région du dispositif électronique (100), d'un événement de changement de région géographique sur le dispositif électronique (100) et l'envoi d'informations sur un changement de région géographique à un module d'installation du dispositif électronique (100) ;
l'obtention (S302) de premières données, dans lequel les premières données sont utilisées pour modifier la première version de l'application cible en une seconde version, et la seconde version est une version qui est de l'application cible et qui correspond à la seconde région géographique, dans lequel l'obtention comprend l'interaction, par le module d'installation, avec un serveur pour obtenir les premières données ; et
la modification (S303) de la version de l'application cible de la première version à la seconde version sur la base des premières données.

2. Procédé selon la revendication 1, dans lequel avant l'obtention de premières données, le procédé comprend en outre : l'envoi d'un identifiant de région de la seconde région géographique au serveur.

3. Procédé selon la revendication 1 ou 2, dans lequel les secondes données comprennent un premier identifiant de l'application cible, les premières données comprennent un second identifiant de l'application cible, le premier identifiant est le même que le second identifiant, et les secondes données sont des données nécessaires à l'obtention de la première version de l'application cible.

4. Procédé selon l'une quelconque des revendications 1 à 3, dans lequel la détermination qu'une région géographique d'utilisation d'une application cible sur le dispositif électronique est commutée d'une première région géographique à une seconde région géographique comprend spécifiquement un ou plusieurs des éléments suivants :
la détermination qu'un emplacement du dispositif électronique est commuté de la première région géographique à la seconde région géographique, ou la détermination qu'une région géographique d'utilisation du dispositif électronique est commutée de la première région géographique à la seconde région géographique, ou la détermination qu'une région géographique d'utilisation dans une boutique d'applications sur le dispositif électronique est commutée de la première région géographique à la seconde région géographique.

5. Procédé selon l'une quelconque des revendications 1 à 4, dans lequel l'obtention de premières données comprend spécifiquement :
l'envoi d'une demande d'obtention de données au serveur, dans lequel la demande d'obtention de données est utilisée pour demander l'obtention des premières données ; et
la réception des premières données envoyées par le serveur.

6. Procédé selon l'une quelconque des revendications 1 à 5, dans lequel la modification de la version de l'application cible de la première version à la seconde version comprend spécifiquement :
la suppression de l'application cible de la première version et le remplacement de l'application cible de la première version par l'application cible de la seconde version, ou la mise à jour de la première version vers la seconde version.

7. Procédé selon l'une quelconque des revendications 1 à 6, dans lequel avant la modification de la version de l'application cible de la première version à la seconde version, le procédé comprend en outre :
le fait de déterminer si une fonction cible est dans un état activé, dans lequel la fonction cible est une fonction de mise à jour automatique de l'application cible lorsque la région géographique d'utilisation de l'application cible change.

8. Procédé selon l'une quelconque des revendications 1 à 7, dans lequel la région géographique d'utilisation comprend un ou plusieurs des éléments suivants :
une ville d'un pays, ou un pays ou une région du monde, ou une autre région géographique prédéfinie.

9. Procédé selon l'une quelconque des revendications 1 à 8, dans lequel l'application cible comprend une application d'installation et/ou une application rapide.

10. Système de commande d'application, comprenant un serveur et un dispositif électronique (100), dans lequel
le dispositif électronique (100) est configuré pour :
si la détermination qu'une région géographique d'utilisation d'une application cible sur le dispositif électronique (100) est commutée d'une première région géographique à une seconde région géographique, comprend l'écoute, par un module d'écoute de région du dispositif électronique (100), d'un événement de changement de région géographique sur le dispositif électronique (100) et l'envoi d'informations sur un changement de région géographique à un module d'installation du dispositif électronique (100),
obtenir des premières données comprenant une interaction, par le module d'installation, avec le serveur afin d'obtenir les premières données, et
modifier une version de l'application cible d'une première version à une seconde version sur la base des premières données, dans lequel la version actuelle de l'application cible est la première version qui correspond à la première région géographique, les premières données sont utilisées pour modifier la première version de l'application cible en la seconde version, et la seconde version est une version qui est de l'application cible et qui correspond à la seconde région géographique ; et
le serveur est configuré pour fournir les premières données au dispositif électronique.

11. Système selon la revendication 10, dans lequel
le dispositif électronique (100) est en outre configuré pour :
avant l'obtention des premières données, envoyer au serveur un identifiant de région de la seconde région géographique ; et
le serveur est en outre configuré pour envoyer les premières données au dispositif électronique (100) en réponse à l'identifiant de région obtenu de la seconde région géographique.

12. Système selon la revendication 10, dans lequel
le dispositif électronique (100) est en outre configuré pour :
avant l'obtention des premières données, envoyer une demande d'obtention de données au serveur, dans lequel la demande d'obtention de données comprend un identifiant de région de la seconde région géographique, et la demande d'obtention de données est utilisée pour demander l'obtention des premières données ; et
le serveur est en outre configuré pour envoyer les premières données au dispositif électronique (100) en réponse à la demande d'obtention de données obtenue.

13. Système selon l'une quelconque des revendications 10 à 12, dans lequel le fait que le dispositif électronique (100) détermine que la région géographique d'utilisation de l'application cible sur le dispositif électronique est commutée de la première région géographique à la seconde région géographique comprend spécifiquement un ou plusieurs des éléments suivants :
la détermination qu'un emplacement du dispositif électronique (100) est commuté de la première région géographique à la seconde région géographique, ou la détermination qu'une région géographique d'utilisation du dispositif électronique est commutée de la première région géographique à la seconde région géographique, ou la détermination qu'une région géographique d'utilisation dans une boutique d'applications sur le dispositif électronique (100) est commutée de la première région géographique à la seconde région géographique.

14. Dispositif électronique (100), comprenant :
au moins une mémoire (120), configurée pour stocker un programme ; et
au moins un processeur (130), configuré pour exécuter le programme stocké dans la mémoire, dans lequel lorsque le programme stocké dans la mémoire est exécuté, le processeur (130) est configuré pour réaliser le procédé selon l'une quelconque des revendications 1 à 9.

15. Support de stockage lisible par ordinateur, dans lequel le support de stockage lisible par ordinateur stocke un programme informatique, et lorsque le programme informatique s'exécute sur un dispositif électronique (100), le dispositif électronique est activé pour réaliser le procédé selon l'une quelconque des revendications 1 à 9.
